# EUROPEAN PATENT APPLICATION

(11) **EP 2 052 940 A2**
(43) Date of publication of application: **29.04.2009**
(21) Application number: 08167324.6
(22) Date of filing: 22.10.2008
(51) Int. Cl.: B61D 33/00

(54) **Toilet system for vehicles, especially railway vehicles**

(30) Priority: 26.10.2007 ES 200702828
(71) Applicant: Tecnicas Modulares E Industriales, S.A., 08400 Granollers (ES)
(72) Inventor: Perez Lama, Ramiro, 08400, Granollers (ES); Rubiano Gomez, Alfons, 08400, Granollers (ES)
(74) Representative: Ponti Sales, Adelaida

(57) **Abstract**

The sanitary system for vehicles comprises a toilet provided with a bowl (1) and a water deposit (2) connected with said bowl (1), and a storage tank (3) for wastes from said toilet bowl (1), said waste tank (3) comprising means (4) for heating the wastes inside it, an exit for concentrated wastes (5) and an exit (6) for water vapour produced by said heating means, and it is characterised in that said vapour extracting means comprises means (11, 12, 14, 15, 16) for recovering the water produced from said vapour that is connected to said water deposit (2) of the toilet.

Permits to reduce the service works of the sanitary system, because it is possible to recover water from the wastes with a quality enough to be used again for the toilet deposit.

## Description

The present invention refers to a sanitary system for vehicles, e.g. trains, that comprises means for recovering water.

### BACKGROUND OF THE INVENTION

The toilets used in some vehicles, such as e.g. in trains, comprise a storage tank to which the wastes of the toilet bowl are sent.

The transportation of these wastes is carried out currently by the thrust of the atmospheric pressure in the case of deposits kept in vacuum conditions, or by a pumping process when tanks at atmospheric pressure are used.

The vacuum toilets and also those that use pumping systems need water to drag the wastes from the bowl to the tank.

In the toilets currently used the water contained in a train is limited approximately to 300-400 litres, because of its weight and the available space, and it must be replaced frequently. This frequent replacement of water involves high service costs.

Furthermore, the storing tank of the wastes must be emptied periodically, and the train must be moved to suitable installations, that involves a high cost for handling the vehicles and the wastes.

### SUMMARY OF THE INVENTION

With the system of the invention said drawbacks can be solved, presenting other advantages that will be described.

The sanitary system for vehicles of the present invention comprises a toilet provided with a bowl and a water deposit connected with said bowl, and a storage tank of the wastes from said toilet bowl, said waste tank comprising means for heating the wastes inside it, means for extracting concentrated wastes and means for extracting the vapour produced by said heating means, and it is characterised in that said means for extracting vapour comprises means for recovering the water produced from said vapour connected to said water deposit of the toilet.

Thanks to this feature, the service works of the sanitary system of the present invention can be reduced, because it is possible to recover water from the wastes with a quality enough to be used again for the toilet deposit.

According to a preferred embodiment, said water recovering means comprises:
- a device for heating the vapour, to produce dry water vapour;
- a device for condensing vapour, to produce distilled water and residual gases; and
- a separating deposit, that separates said water from said residual gases, said separating deposit being connected to the water deposit of said toilet.

Preferably, said device for heating the vapour is a deposit provided with at least one electric resistance, said condensing vapour comprising a cooling battery and/or a heat exchanger, the cooling battery being provided with a motor fan, and between said separating deposit and said toilet deposit is arranged a water pump. If the vapour condensing device comprises a cooling battery and a heat exchanger, it would be connected in series.

Furthermore, said separating deposit comprises advantageously an exit for residual gases provided with an odour filter.

It must be pointed out that the system of the present invention can also be used keeping the tank at an atmospheric pressure.

### BRIEF DESCRIPTION OF THE DRAWINGS

For a better understanding of what has been disclosed some drawings are attached in which, diagrammatically and only as a non-limitative example, a practical case of embodiment is shown.

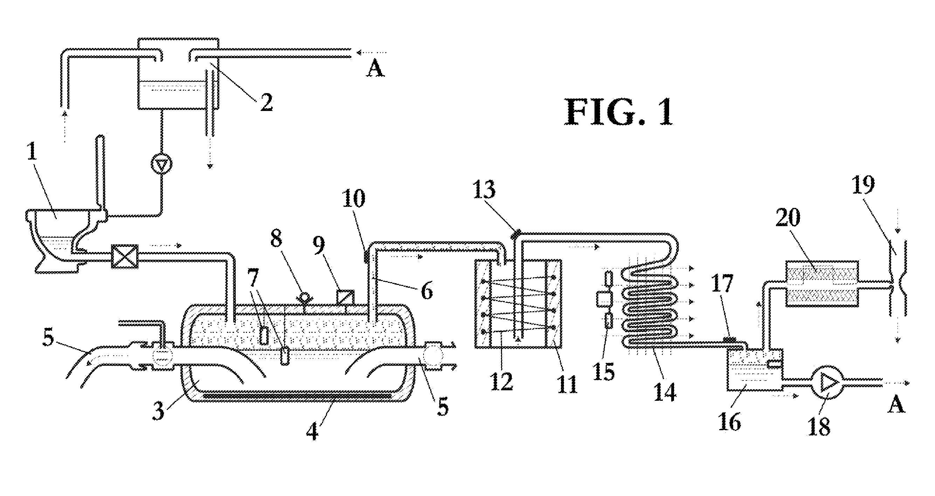

Fig. 1 is a diagrammatical view of the sanitary system for vehicles of the present invention.

### DESCRIPTION OF A PREFERRED EMBODIMENT

As it can be seen from Fig. 1, the sanitary system of the present invention comprises a toilet that comprises a bowl 1 and a water deposit 2 communicated to each other.

The wastes from the bowl 1 are stored in a waste tank 3 provided with heating means, e.g. electric resistances 4. These resistances 4 heat the wastes inside the tank 3 to a temperature from 70°C and 80°C approximately.

The tank 3 also comprises exits for concentrated wastes 5 and an exit for water vapour 6, said vapour being produced by the heating of said wastes inside the tank 3.

To control the content of the tank 3, it comprises level sensors 7, a security valve 8 and a pressure sensor 9. The exit of water vapour 6 comprises a temperature sensor 10.

The water vapour is conducted to a heating device that is preferably a deposit 11 provided with an electric resistance 12. The end of this additional heating, at about 90°C, is to convert the saturated water vapour that exits from the tank 3 in overheated vapour, exempt of water micro-drops in suspension, because these micro-drops could contaminate the water obtained at the end of the recovering process. A temperature sensor 13 is provided at the exit of said deposit 11.

At the exit of the deposit 11, the overheated vapour is conducted to a condensing device, preferably a condensing battery 14 provided with a motor fan 15. Said condensing battery can also be a heat exchanger, or it can be placed in series with a heat exchanger, to make use of the residual heat of the recovering process of the water to other ends, such us e.g. to heat water for the heating of the train or for using it in showers, etc.

When the overheated vapour passes through this cooling battery 14, distilled water is obtained, approximately at 30°C, and a little quantity of residual gases that cannot condensate.

The exit of this cooling battery 14 is connected to a separating deposit 16, and a temperature sensor 17 is placed at its entrance. In this separating deposit 16 the separation between the distilled water and the residual gases is carried out.

The distilled water, through a water pump 18 is sent back to the deposit of the toilet 2, as it can be seen by the arrows A in Fig. 1.

On the other hand, a vacuum generator 19 ejects the residual gases outside, after passing by an odour filter 20.

The recovered water can be used directly for using it in the toilet, because it is treated against germs because the high temperatures of the recovering process. If wished, it is possible to apply products to perfume the water.

It must be pointed out that the system of the present invention can also be used keeping the tank under atmospheric pressure. In this case, the temperature inside the waste tank would be about 101°C, and the circulation of vapour would be carried out thanks to the slight overpressure inside the tank with respect to the atmospheric pressure.

Even though reference is made to a specific embodiment of the invention, it is apparent for a person skilled in the art that the described sanitary system is susceptible of numerous variations and modifications, and that all the details cited can be substituted by other technically equivalent ones, without departing from the scope of protection defined by the attached claims.

## Claims

1. Sanitary system for vehicles comprising a toilet provided with a bowl (1) and a water deposit (2) connected with said bowl (1), and a storage tank (3) for wastes from said toilet bowl (1), said waste tank (3) comprising means (4) for heating the wastes inside it, an exit for concentrated wastes (5) and an exit (6) for water vapour produced by said heating means, **characterised in that** said vapour extracting means comprises means (11, 12, 14, 15, 16) for recovering the water produced from said vapour that is connected to said water deposit (2) of the toilet.

2. Sanitary system according to claim 1, **characterised in that** said means for recovering the water comprises:
- a device for heating the vapour (11, 12) to produce dry water vapour;
- a device for condensing the vapour (14, 15) to produce distilled water and residual gases; and
- a separating deposit (16), that separates said water and said residuals gases, said separating deposit being connected to the water deposit of said toilet.

3. Sanitary system according to claim 2, **characterised in that** said device for heating the vapour is a deposit (11) provided with at least an electric resistance (12).

4. Sanitary system according to claim 2, **characterised in that** said device for condensing the vapour is a cooling battery (14) and/or a heat exchanger provided with a motor fan (15).

5. Sanitary system according to claim 4, **characterised in that** said device for condensing the vapour is a cooling batter (14) and a heat exchanger connected in series.

6. Sanitary system according to claim 2, **characterised in that** between said separating deposit (16) and said toilet deposit (2) is arranged a water pump (18).

7. Sanitary system according to claim 2, **characterised in that** said separating deposit (16) comprises an exit for residual gases provided with an odour filter (20).
